(19) Europäisches Patentamt
European Patent Office
Office européen des brevets

(11) **EP 4 224 045 B1**

(12) **EUROPEAN PATENT SPECIFICATION**

(45) Date of publication and mention
of the grant of the patent:
**04.02.2026 Bulletin 2026/06**

(21) Application number: **20956063.0**

(22) Date of filing: **07.12.2020**

(51) International Patent Classification (IPC):
*F16K 31/06* (2006.01)      *F16K 31/40* (2006.01)
*F16K 17/10* (2006.01)      *F16K 17/06* (2006.01)

(52) Cooperative Patent Classification (CPC):
**F16K 31/408; F16K 17/06; F16K 17/105;**
**F16K 31/0624; F16K 47/0111**

(86) International application number:
**PCT/CN2020/134210**

(87) International publication number:
**WO 2022/068046 (07.04.2022 Gazette 2022/14)**

(54) **PILOT-OPERATED ELECTRIC PROPORTIONAL HIGH-PRESSURE RELIEF VALVE**

VORGESTEUERTES ELEKTRISCHES PROPORTIONAL-HOCHDRUCKENTLASTUNGSVENTIL

SOUPAPE DE DÉCHARGE HAUTE PRESSION PROPORTIONNELLE ÉLECTRIQUE COMMANDÉE
PAR PILOTE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.09.2020 CN 202011062690**

(43) Date of publication of application:
**09.08.2023 Bulletin 2023/32**

(73) Proprietors:
• **Weichai Power Co., Ltd.**
**Weifang, Shandong 261061 (CN)**
• **Linde Hydraulics (China) Co., Ltd.**
**Weifang, Shandong 261061 (CN)**

(72) Inventors:
• **WU, Shaoze**
**Weifang, Shandong 261061 (CN)**

• **REN, Jian**
**Weifang, Shandong 261061 (CN)**
• **DONG, Zhaosheng**
**Weifang, Shandong 261061 (CN)**

(74) Representative: **Zacco Sweden AB**
**P.O. Box 5581**
**Löjtnantsgatan 21**
**114 85 Stockholm (SE)**

(56) References cited:
**CN-A- 102 444 637      CN-A- 103 122 882**
**CN-A- 103 233 936      CN-A- 104 696 315**
**CN-U- 203 670 808      CN-U- 209 370 185**
**US-A1- 2005 045 229      US-A1- 2007 245 889**
**US-A1- 2013 081 714**

**Description**

This application claims priority to Chinese Patent Application No. 202011062690.5 filed Sep. 30, 2020.

TECHNICAL FIELD

The present application relates to the technical field of hydraulic valves, for example, a pilot-operated electric proportional high-pressure relief valve.

BACKGROUND

An electric proportional relief valve is a hydraulic valve that controls the displacement of the valve core through a proportional electromagnet (a force and current conversion element whose output force and input current are in a linear relationship) to adjust the inlet pressure.

In the related art, there are many electric proportional relief valves, but most of them are direct-acting, that is, the displacement of the main valve core is directly controlled by a proportional electromagnet to control the relief pressure. For a small number of pilot-operated electric proportional relief valves, due to the limitation of the structure of the pilot valve core, the output force of the proportional electromagnet needs to be relatively large. In this manner, an electromagnet with a relatively small conventional output force value cannot meet the requirements, making it difficult to achieve high pressure and precise control of a pilot-operated electric proportional relief valve. A pilot-operated proportional relief valve according to the preamble of claim 1 is known from US 2007/245889 A1.

SUMMARY

The present application provides a pilot-operated electric proportional high-pressure relief valve, addressing the failure to achieve high pressure and precise control of an electric proportional relief valve.

An embodiment provides a pilot-operated electric proportional high-pressure relief valve. The valve includes a main valve, a pilot valve, and a proportional electromagnet assembly connected in sequence.

The main valve includes a main valve sleeve and a main valve core sleeved in the main valve sleeve. A first end of the main valve sleeve is provided with an oil inlet configured to be selectively blocked by the main valve core. A side of the main valve sleeve is provided with a relief port.

The pilot valve includes a first transition sleeve, a pilot valve core, and a pilot screw plug. The first transition sleeve is sealingly installed on a second end of the main valve. The first transition sleeve is provided with a stepped counterbore. The pilot valve core and the pilot screw plug are sequentially installed in the counterbore. The counterbore is provided with a first accommodating chamber and a second accommodating chamber communicating with each other. A first end of the pilot valve core is configured to abut against a stepped ring edge of the counterbore to separate the first accommodating chamber from the second accommodating chamber. A second end of the pilot valve core is sealingly plugged in an installation groove of the pilot screw plug. A third accommodating chamber is formed by being enclosed by the second end of the pilot valve core and an inner wall of the installation groove.

A first end of the first transition sleeve is provided with a first damping hole connecting the oil inlet and the first accommodating chamber. A second damping hole connecting the first accommodating chamber and the third accommodating chamber is disposed in the pilot valve core. A side wall of the first transition sleeve is provided with a drain hole connecting the second accommodating chamber and an oil tank. The first axial action area of the first end of the pilot valve core on which hydraulic oil in the first accommodating chamber acts is greater than the second axial action area of the second end of the pilot valve core on which hydraulic oil in the third accommodating chamber acts.

The proportional electromagnet assembly includes an electromagnetic coil and a movable iron member disposed in the electromagnetic coil. A first end of the movable iron member abuts against an end of the second end of the pilot valve core. The electromagnetic coil is configured to generate an electromagnetic force acting on the movable iron member to press the pilot valve core against the stepped ring edge.

BRIEF DESCRIPTION OF DRAWINGS

FIG. 1 is a view illustrating the structure of a pilot-operated electric proportional high-pressure relief valve according to an embodiment of the present application.

FIG. 2 is an enlarged view of a pilot valve core of a pilot-operated electric proportional high-pressure relief valve according to an embodiment of the present application.

Reference list

| | |
|---|---|
| 1 | main valve |
| 11 | main valve sleeve |
| 111 | oil inlet |
| 112 | relief port |
| 12 | main valve core |
| 121 | third damping hole |
| 2 | pilot valve |
| 21 | first transition sleeve |

| | |
|---|---|
| 211 | first damping hole |
| 212 | drain hole |
| 213 | stepped ring edge |
| 22 | pilot valve core |
| 221 | second damping hole |
| 222 | conical sealing surface |
| 23 | pilot screw plug |
| 231 | installation groove |
| 2311 | large-diameter groove section |
| 2312 | small-diameter groove section |
| 3 | proportional electromagnet assembly |
| 31 | electromagnetic coil |
| 32 | movable iron member |
| 321 | guide rod part |
| 322 | sliding part |
| 33 | second transition sleeve |
| 34 | housing |
| 35 | guide sleeve |
| 36 | electromagnet screw plug |
| 37 | buffer sheet |
| 38 | control plug |
| 4 | first return spring |
| 5 | second return spring |
| 6 | first sealing ring |
| 7 | first retaining ring |
| 8 | second sealing ring |
| 9 | second retaining ring |
| 10 | third sealing ring |
| 100 | first accommodating chamber |
| 200 | second accommodating chamber |
| 300 | third accommodating chamber |
| 400 | fourth accommodating chamber; |
| A1 | first axial action area |
| A2 | second axial action area |
| A3 | third axial action area |
| A4 | fourth axial action area |

DETAILED DESCRIPTION

In the description of the present application, unless otherwise expressly specified and limited, a term "connected to each other", "connected" or "secured" is to be construed in a broad sense, for example, as securely connected, detachably connected, or integrated; mechanically connected or electrically connected; directly connected to each other or indirectly connected to each other via an intermediary; or internally connected between two components or interaction relations between two components. For those of ordinary skill in the art, specific meanings of the preceding terms in the present application may be construed according to specific circumstances.

In the present application, unless otherwise expressly specified and limited, when a first feature is described as "above" or "below" a second feature, the first feature and the second feature may be in direct contact or be in contact via another feature between the two features instead of being in direct contact. Moreover, when the first feature is "on", "above", or "over" the second feature, the first feature is right on, above, or over the second feature, or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

In the description of the present application, it should be noted that orientations or position relations indicated by terms such as "above", "below", "right" and the like are based on orientations or position relations shown in the drawings. These orientations or position relations are intended only to facilitate and simplify the operation, and not to indicate or imply that a device or element referred to must have such specific orientations or must be configured or operated in such specific orientations. Thus, these orientations or position relations are not to be construed as limiting the present application. In addition, terms "first" and "second" are used only to distinguish between descriptions and have no special meaning.

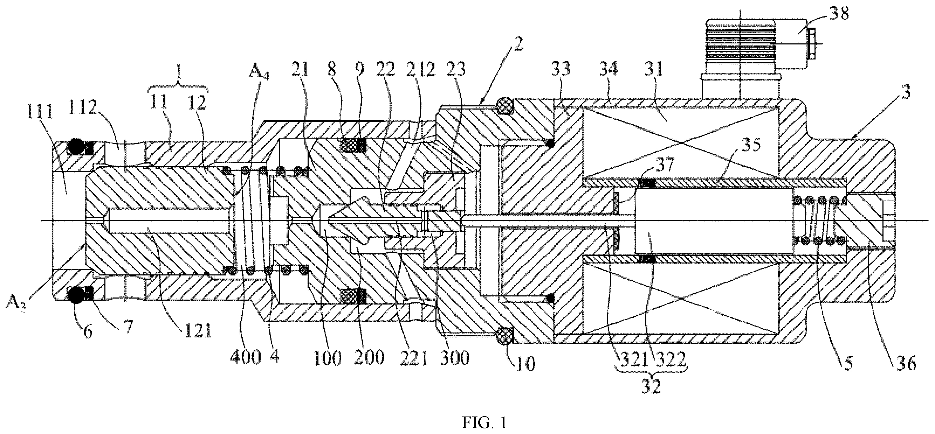

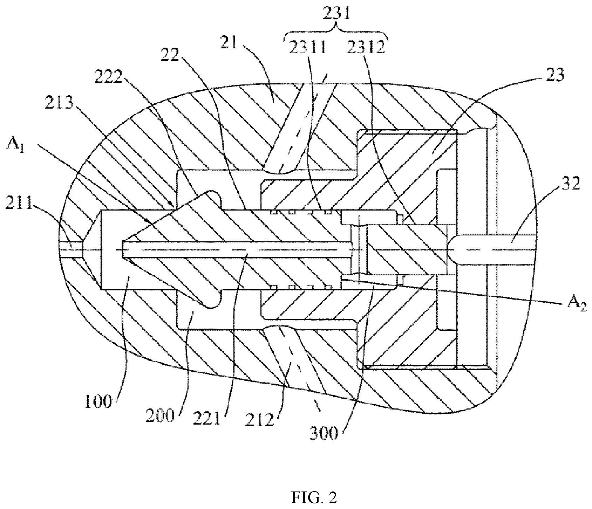

As shown in FIGS. 1 and 2, an embodiment of the present application provides a pilot-operated electric proportional high-pressure relief valve, which can be used for pressure holding and back pressure of a hydraulic system to ensure the safety of the hydraulic system. The pilot-operated electric proportional high-pressure relief valve includes a main valve 1, a pilot valve 2 and a proportional electromagnet assembly 3 sealingly connected in sequence. The main valve 1 includes a main valve sleeve 11 and a main valve core 12 sleeved in the main valve sleeve 11. A first end of the main valve sleeve 11 is provided with an oil inlet 111. A side of the main valve sleeve 11 is provided with a relief port 112.

The pilot valve 2 is sealingly installed on a second end of the main valve sleeve 11. The pilot valve 2 includes a first transition sleeve 21, a pilot valve core 22, and a pilot screw plug 23. The first transition sleeve 21 is provided with a stepped counterbore. The pilot valve core 22 and the pilot screw plug 23 are sequentially installed in the counterbore. A first end of the pilot valve core 22 abuts against a stepped ring edge 213 of the counterbore to separate the first accommodating chamber 100 from the second accommodating chamber 200. A second end of the pilot valve core 22 is sealingly plugged in an installation groove 231 of the pilot screw plug 23. The diameter of a second end of the pilot valve core 22 is smaller than the diameter of the installation groove 231. A third accommodating chamber 300 is formed by being enclosed by the second end of the pilot valve core 22 and an inner wall of the installation groove 231.

The main valve core 12 is provided with a third damping hole 121. The first transition sleeve 21 is provided with a first damping hole 211. The pilot valve core 22 is provided with a second damping hole 221. The third damping hole 121, the first damping hole 211, and the second damping hole 221 connect the oil inlet 111, the first accommodating chamber 100, and the third accommodating chamber 300 in sequence. The first axial action area A1 of the first end of the pilot valve core 22 on which the hydraulic oil in the first accommodating chamber 100 acts is greater than the second axial action area A2 of the second end of the pilot valve core 22 on which the hydraulic oil in the third accommodating chamber 300 acts.

The proportional electromagnet assembly 3 includes an electromagnetic coil 31 and a movable iron member 32 disposed in the electromagnetic coil 31. A first end of the movable iron member 32 abuts against an end of the second end of the pilot valve core 22. The electromagnetic coil 31 is energized to apply an electromagnetic force on the movable iron member 32 so that the movable iron member 32 presses the pilot valve core 22 against the stepped ring edge 213.

In the present embodiment, in a normal pressure-holding state, the force applied on the first end of the pilot valve core 22 is less than or equal to the force applied on the second end of the pilot valve core 22. The first end of the pilot valve core 22 closely abuts against the stepped ring edge 213. In a relief state, the force applied on the first end of the pilot valve core 22 is greater than the force applied on the second end of the pilot valve core 22, and the pilot valve core 22 moves to the right (in FIG. 2, the pilot valve core 22 moves to the right, and in FIG. 1, the pilot valve core 22 moves upward). In this case, the first accommodating chamber 100 communicates with the second accommodating chamber 200, the hydraulic oil is unloaded from the drain hole 212 communicating with the second accommodating chamber 200, and the main valve core 12 moves to the right under the action of the oil inlet pressure so that the relief port 112 is opened for relief.

The condition for opening the pilot valve core 22 is as follows:

$$P(A_1 - A_2) > F_m$$

In the formula, $F_m$ denotes the pressure of the movable iron member 32 acting on the second end of the pilot valve core 22. P denotes the pressure of the main valve, that is, the pressure of the hydraulic oil at the oil inlet 111. $A_1$ is the action area of the first end of the pilot valve core 22 on which the hydraulic oil acts. $A_2$ is the action area of the second end of the pilot valve core 22 on which the hydraulic oil acts.

It can be seen from the above formula that by changing the difference between A1 and A2, a relatively small $F_m$ can also meet the requirement for relief control when P is relatively large, which can reduce the requirement for the output force of the proportional electromagnet assembly 3 and expand the voltage regulation scope.

According to different pressures P of the main valve and the output force $F_m$ of the proportional electromagnet assembly 3, the main valve pressure can be controlled precisely by flexibly adjusting the magnitude relationship between $A_1$ and $A_2$.

The specific structure of the main valve 1 is shown in FIG. 1. The oil inlet 111 of the main valve 1 is generally connected to the main oil inlet pipeline of the hydraulic system. When the pressure in the main oil inlet pipeline exceeds the limited pressure, the main valve core 12 moves to the right with respect to the main valve sleeve 11 so that the oil inlet 111 of the main valve 1 communicates with the relief port 112 to achieve pressure relief. The main valve core 12 is slidably installed in the main valve sleeve 11. The inner wall of the main valve sleeve 11 is provided with a main sealing ring edge near the oil inlet 111. The front end of the main valve core 12 has an inclined main sealing surface. In a normal pressure-holding state, the main sealing surface abuts against the main sealing ring edge. When relief occurs, the main sealing surface is separated from the main sealing ring edge, and the oil inlet 111 communicates with the relief port 112. The outer wall of the main valve sleeve 11 is provided with an annular groove. A first sealing ring 6 and a first retaining ring 7 are sleeved in the annular groove in sequence. The first sealing ring 6 and the first retaining ring 7 are configured to achieve a sealing connection of the main valve sleeve 11 to the valve seat or other fixed structures.

The main valve sleeve 11 has a structure of which the diameter gradually expands from one side of main valve sleeve 11 where the oil inlet 111 is to the other side of the main valve sleeve 11. The inner diameter of the side of the main valve sleeve 11 close to the oil inlet 111 is smaller than the inner diameter of the side of the main valve sleeve 11 away from the oil inlet 111, that is, the inner diameter of the first end of the main valve sleeve 11 is smaller than the inner diameter of the second end of the main valve sleeve 11. A first transition sleeve 21 is sealingly sleeved in the second end of the main valve sleeve 11. The outer wall of the first transition sleeve 21 is provided with an annular groove. A second sealing ring 8 and a second retaining ring 9 are sleeved in the annular groove in sequence. The second sealing ring 8 and the second retaining ring 9 are configured to achieve a sealing connection between the main valve sleeve 11 and the first transition sleeve 21.

The main valve core 12 and the first transition sleeve 21 are arranged at intervals in the main valve sleeve 11. A fourth accommodating chamber 400 is formed by being enclosed by the second end of the main valve core 12, the first end of the first transition sleeve 21, and the inner wall of the main valve sleeve 11. The third damping hole 121 disposed in the main valve core 12 connects the oil inlet 111 and the fourth accommodating chamber 400 so that both ends of the main valve core 12 are subjected to the force of hydraulic oil, and the sliding is stable. A first return spring 4 is installed between the main valve core 12 and the first transition sleeve 21. The first return spring 4 is configured to apply a spring force to the second end of the main valve core 12 to ensure the sealing effect of the main valve core 12. At the same time, the first return spring 4 is configured to reset the main valve core 12 after achieving relief.

For example, according an embodiment, the third axial action area A3 of a first end of the main valve core 12 on which hydraulic oil at the oil inlet 111 acts is less than or equal to the fourth axial action area A4 of a second end of the main valve core 12 on which hydraulic oil in the fourth accommodating chamber 400 acts. In this manner, a pressure difference between the two ends of the main valve core 12 is maintained to effect sealing. In a normal pressure-holding state, the pressure at both ends of the main valve core12 is as follows:

$$PA_3 < PA_4 + F_r$$

In the formula, $F_r$ denotes the force exerted by the first return spring 4 on the second end of the main valve core 12. P denotes the pressure of the main valve. $A_3$ denotes the pressure-receiving area of the first end of the main valve core 12, and $A_4$ denotes the pressure-receiving area of the second end of the main valve core 12.

During relief of the relief valve, the pressure oil in the fourth accommodating chamber 400 is discharged through the pilot valve 2, and the hydraulic pressure on the second end of the main valve core 12 is zero. At this time, the pressure on the main valve core 12 is as follows:

$$PA_3 > F_r$$

It can be known from the formula that the force applied on the first end of the main valve core 12 is greater than the force applied on the second end of the main valve core 12, the main valve core 12 moves toward the second end, and the oil inlet 111 communicates with the relief port 112 to achieve relief.

The specific structure of the pilot valve 2 is shown in FIG. 2. The inside of the first transition sleeve 21 of the pilot valve 2 is provided with a stepped counterbore. The pilot valve core 22 abuts against a stepped ring edge 213 of the counterbore to divide the counterbore into the first accommodating chamber 100 and the second accommodating chamber 200. A first damping hole 211 disposed in the first transition sleeve 21 connects the first accommodating chamber 100 and the fourth accommodating chamber 400. A side of the first transition sleeve 21 is provided with a drain hole 212 penetrating through the first transition sleeve 21. The position corresponding to the drain hole 212 on the main valve sleeve 11 is provided with a drain port. A first end of the drain hole 212 communicates with the second accommodating chamber 200, and a second end of the drain hole 212 communicates with the oil tank through the drain port.

During relief, the pilot valve core 22 is separated from the stepped ring edge 213, the first accommodating chamber 100 communicates with the second accommodating chamber 200, and the hydraulic oil flows back into the oil tank through the drain hole 212 and the drain port.

The outer wall of the first transition sleeve 21 located outside the main valve sleeve 11 is provided with an annular groove. A third sealing ring 10 is disposed in the annular groove. The third sealing ring is configured to achieve a sealing of the first transition sleeve 21 and the valve seat or other fixed structures.

In the present embodiment, the first end of the pilot valve core 22 has a conical sealing surface 222 configured to abut against the stepped ring edge 213 to ensure the sealing effect. In other embodiments, the sealing structure between the pilot valve core 22 and the first transition sleeve 21 may also adopt other forms. For example, the first end of the pilot valve core 22 may also be configured to be in a spherical shape and sealed by the spherical sealing surface, or the stepped ring edge 213 of the first transition sleeve 21 may also be configured to be a conical surface to expand the sealing contact area and achieve a better sealing effect. The structure capable of achieving effective sealing between the pilot valve core 22 and the first transition sleeve 21 falls within the protection scope of the present application, and is not limited herein.

The second end of the pilot valve core 22 is plugged in the installation groove 231 in the pilot screw plug 23. The second end of the pilot valve core 22 features a stepped columnar structure including a large-diameter shaft section and a small-diameter shaft section. The installation groove 231 in the pilot screw plug 23 is a through stepped groove including a large-diameter groove section 2311 and a small-diameter groove section 2312. The large-diameter shaft section is sealingly and slidably installed in the large-diameter groove section 2311. The small-diameter shaft section is sealingly and slidably installed in the small-diameter groove section 2312 and extends through the small-diameter groove section 2312. The end of the small-diameter groove section 2312 abuts against the movable iron member 32. One end of the small-diameter shaft section extends into the large-diameter groove section 2311, and the diameter of the small-diameter shaft section is smaller than the inner diameter of the large-diameter groove section 2311. A third accommodating chamber 300 is formed between the small-diameter shaft section and the large-diameter groove section 2311. A second damping hole 221 is disposed in the pilot valve core 22. The second damping hole 221 connects the first accommodating chamber 100 and the third accommodating chamber 300.

In the present embodiment, the relationship between the first axial action area A1 of the pilot valve core 22 on which the hydraulic oil in the first accommodating chamber 100 acts, and the second axial action area A2 of the pilot valve core 22 on which the hydraulic oil in the third accommodating chamber 300 acts is generally configured to be 1.05 < A1:A2 < 1.3. The specific magnitude relationship between A1 and A2 may be determined according to the pressure-holding requirements of the hydraulic system and the model of the proportional electromagnet 3, and is not limited herein.

In an embodiment of the present application, the outer wall of the pilot screw plug 23 is provided with external threads. The inner wall of the second end of the counterbore is provided with internal threads. The pilot screw plug 23 is fixed in the counterbore through threads.

The proportional electromagnet assembly 3 is installed on the second end of the pilot valve 2 and is configured to apply force to the pilot valve core 2 so that the pilot valve core 2 abuts against the stepped ring edge 213. The proportional electromagnet assembly 3 also includes a second transition sleeve 33, a housing 34, and a guide sleeve 35 in addition to the electromagnetic coil 31 and the movable iron member 32. The second transition sleeve 33 is configured to connect the pilot valve 2 and other components of the proportional electromagnet assembly 3. The second transition sleeve 33 includes a first installation section, a second installation section, and a third installation section. The first installation section is arranged inside the second end of the first transition sleeve 21, the housing 34 is sleeved outside the second installation section, and the guide sleeve 35 is sleeved outside the third installation section. The electromagnetic coil 31 is provided between the housing 34 and the guide sleeve 35, and the movable iron member 32 is slidably sleeved in the guide sleeve 35.

A cylindrical movable iron member installation space is formed in the guide sleeve 35. The movable iron member 32 slides in the movable iron member installation space under the electromagnetic force of the electromagnetic coil 31. The movable iron member 32 includes a guide rod part 321 at a first end and a sliding part 322 at a second end. The outer diameter of the guide rod part 321 is smaller than the outer diameter of the sliding part 322. The guide rod part 321 is configured to abut against the pilot valve core 22, and the sliding part 322 is configured to receive force and slide in the movable iron member installation space. The second transition sleeve 33 is provided with a through hole. The guide rod part 321 extends through the through hole and abuts against the second end of the pilot valve core 22. Optionally, a buffer sheet 37 is provided between the second transition sleeve 33 and the sliding part 322. The buffer sheet 37 is sleeved on the guide rod part 321 and bonded to the second transition sleeve 33. The buffer sheet 37 is made of a soft material such as a rubber material and is configured to prevent frictional interference between the second transition sleeve 33 and the sliding part 322.

The proportional electromagnet assembly 3 also includes an electromagnet screw plug 36 configured to limit the stroke of the movable iron member 32. The electromagnet screw plug 36 is installed on the second end of the housing 34, a threaded hole is opened at the second end of the housing 34, and the electromagnet screw plug 36 is installed in the housing 34 through threads. The electromagnet screw plug 36 and the sliding part 322 of the movable iron member 32 are arranged at intervals. A second return spring 5 is provided between the electromagnet screw plug 36 and the sliding part 322. The second return spring 5 is configured for reset after the movable iron member 32 is moved so that the pilot valve core 22 resets in time.

The proportional electromagnet assembly 3 also includes a control plug 38 plugged on the housing 34. The control plug 38 is electrically connected to the electromagnetic coil 31 and is configured to supply power to the electromagnetic coil 31 so that the electromagnetic coil 31 generates an electromagnetic field to apply an electromagnetic force on the movable iron member 32. The electromagnetic coil 31 in the present embodiment is a proportional electromagnetic coil 31, and the electromagnetic force generated by the proportional electromagnetic coil 31 and acting on the movable iron member 32 has a linear relationship with the supply current. In the present embodiment, due to the design of the structure in which two ends of the pilot valve core 22 have different pressure-receiving areas, the electromagnetic coil 31 can adjust a larger relief pressure with a smaller electromagnetic force. In this manner, a smaller electromagnetic coil 31 and movable iron member 32 can be adopted, and the volume of the proportional electromagnet assembly 3 and the entire relief valve can be reduced.

The assembly process of the pilot-operated electric proportional high-pressure relief valve provided in the embodiment of the present application is as follows.

For the assembly of the hydraulic structure, the second sealing ring 8 and the second retaining ring 9 are sleeved into the annular groove of the outer wall of the first transition sleeve 21, the first sealing ring 6, the first retaining ring 7, and the third sealing ring 10 are sequentially put into the corresponding annular grooves on the outer wall of the main valve sleeve 11; the main valve core 12, the first return spring 4, and the first transition sleeve 21 are sequentially put into the main valve sleeve 11, and the main valve sleeve 11 are put into the external valve seat or other mechanisms; the pilot valve core 22 and the pilot screw plug 23 are sequentially put into the counterbore of the first transition sleeve 21, and the pilot screw plug 23 is screwed tightly.

At this point, the assembly of the hydraulic structure is finished.

For the assembly of the proportional electromagnet assembly, the buffer sheet 37 is bonded to the second end of the second transition sleeve 33, and the movable iron member 32 is plugged in the through hole in the second transition sleeve 33; the guide sleeve 35, the electromagnetic coil 31, and the housing 34 are sequentially sleeved on the third installation section of the second transition sleeve 33 from the inside to the outside; the second return spring 5 is installed in the movable iron member installation space in the guide sleeve 35, the electromagnet screw plug 36 is installed in the second end of the housing 34, and the electromagnet screw plug 36 is screwed tightly so that two ends of the second return spring 5 respectively abut against the movable iron member 32 and the electromagnet screw plug 36; the control plug 38 is plugged in the corresponding groove of the housing 34. At this point, the assembly of the proportional electromagnet assembly 3 is finished.

The working process of the pilot-operated electric proportional high-pressure relief valve provided in the embodiment of the present application is as follows.

The main valve pressure P acts on the first end of the main valve core 12 and sequentially flows into the fourth accommodating chamber 400, the first accommodating chamber 100 and the third accommodating chamber 300 through the third damping hole 121, the first damping hole 211 and the second damping hole 221. If the opening condition of the pilot valve core 22 is not satisfied, that is, the force on the first end of the pilot valve core 22 is less than the force on the second end of the pilot valve core 22, the hydraulic oil in multiple accommodating chambers is stationary, and the pilot valve core 22 is in a closed state. At the same time, the first end of the main valve core 12 abuts against the main sealing ring edge, and the main valve core 12 is in a closed state. At this time, the pilot-operated electric proportional high-pressure relief valve is in a pressure-holding state.

If the pressure P of the main valve is higher than the set oil pressure, the oil pressure is transmitted to the corresponding accommodating chambers through multiple damping holes. At this time, the force applied on the first end of the pilot valve core 22 is greater than the force applied on the second end of the pilot valve core 22, and the opening condition of the pilot valve core 22 is satisfied. In this case, the first accommodating chamber 100 communicates with the second accommodating chamber 200, and the hydraulic oil at the oil inlet 111 flows back to the oil tank through the third damping hole 121, the fourth accommodating chamber 400, the first damping hole 211, the first accommodating chamber 100, the second accommodating chamber 200, and the drain hole 212 in sequence. Due to the flow of the hydraulic oil, a pressure difference is generated between the first end and the second end of the main valve core 12, the main valve core 12 opens, the oil inlet 111 communicates with the relief port 112, and the hydraulic oil exceeding the limited pressure is relieved through the relief port 112.

When the main valve pressure P returns below the limited pressure, the pilot valve core 22 is first closed, then the main valve core 12 is closed, and the pilot-operated electric proportional high-pressure relief valve provided by the present embodiment returns to the pressure-holding state.

The present application has the beneficial effects below.

The pressure-receiving areas of two ends of the pilot valve core 22 of the pilot-operated electric proportional high-pressure relief valve provided by the present application are different. By configuring the difference between the pressure-receiving areas of the pilot valve core 22, a larger relief pressure can be adjusted with a smaller electromagnet coil output force, the demand for the output force value and withstand voltage level of the proportional electromagnet is reduced, the matching design of the proportional electromagnet is easier to achieve, and the design difficulty and cost are reduced. For the same proportional electromagnet, the amount of control current and power consumption can be reduced. The magnitude relationship between the pressure-receiving areas at two end ends of the pilot valve core 22 is specifically configured according to different main valve pressures, the output force of the proportional electromagnet assembly 3, and different working conditions so that the main valve pressure can be controlled precisely.

## Claims

1. A pilot-operated proportional high-pressure relief valve, comprising

   a main valve (1), a pilot valve (2), and a proportional assembly (3) connected in sequence, wherein
   the main valve (1) comprises a main valve sleeve (11) and a main valve core (12) sleeved in the main valve sleeve (11), a first end of the main valve sleeve (11) is provided with an oil inlet (111) configured to be selectively blocked by the main valve core (12), and a side of the main valve sleeve (11) is provided with a relief port (112);
   the pilot valve (2) comprises a first transition sleeve (21), a pilot valve core (22), and a pilot screw plug (23); the first transition sleeve (21) is sealingly installed on a second end of the main valve (1); the first transition sleeve (21) is provided with a stepped counterbore; the pilot valve core (22) and the pilot screw plug (23) are sequentially installed in the counterbore; the counterbore is provided with a first accommodating chamber (100) and a second accommodating chamber (200) communicating with each other; a first end of the pilot valve core (22) is configured to abut against a stepped ring edge (213) of the counterbore to separate the first accommodating chamber (100) from the second accommodating chamber (200); a second end of the pilot valve core (22) is sealingly plugged in an installation groove (231) of the pilot screw plug (23); and a third accommodating chamber (300) is formed by being enclosed by the second end of the pilot valve core (22) and an inner wall of the installation groove (231);
   a first end of the first transition sleeve (21) is provided with a first damping hole (211) connecting the oil inlet (111) and the first accommodating chamber (100); a second damping hole (221) connecting the first accommodating chamber (100) and the third accommodating chamber (300) is disposed in the pilot valve core (22); a side wall of the first transition sleeve (21) is provided with a drain hole (212) connecting the second accommodating chamber (200) and an oil tank; and a first axial action area ($A_1$) of the first end of the pilot valve core (22) on which hydraulic oil in the first accommodating chamber (100) acts is greater than a second axial action area ($A_2$) of the second end of the pilot valve core (22) on which hydraulic oil in the third accommodating chamber (300) acts; and **characterised in that** the pilot-operated proportional high-pressure relief valve is a pilot-operated electric proportional high-pressure relief valve and **in that** the proportional assembly is a proportional electromagnet assembly (3) which comprises an electromagnetic coil (31) and a movable iron member (32) disposed in the electromagnetic coil (31), wherein a first end of the movable iron member (32) abuts against an end of the second end of the pilot valve core (22), and the electromagnetic coil (31) is configured to generate an electromagnetic force acting on the movable iron member (32) to press the pilot valve core (22) against the stepped ring edge (213).

2. The pilot-operated electric proportional high-pressure relief valve according to claim 1, wherein a ratio of the first axial action area ($A_1$) to the second axial action area ($A_2$) is greater than 1.05 and less than 1.3.

3. The pilot-operated electric proportional high-pressure relief valve according to claim 1, wherein the first end of the pilot valve core (22) has a conical sealing surface (222) configured to abut against the stepped ring edge (213) to separate the first accommodating chamber (100) from the second accommodating chamber (200).

4. The pilot-operated electric proportional high-pressure relief valve according to claim 1, wherein the installation groove (231) is a stepped groove comprising a large-diameter groove section (2311) and a small-diameter groove section (2312), a middle part of the pilot valve core (22) is slidably installed on the large-diameter groove section (2311), and the second end of the pilot valve core (22) is slidably installed on the small-diameter groove section (2312) and extends through the small-diameter groove section (2312).

5. The pilot-operated electric proportional high-pressure relief valve according to claim 1, wherein the first end of the first transition sleeve (21) is sleeved in the main valve sleeve (11); a fourth accommodating chamber (400) is formed by being enclosed by an inner wall of the main valve sleeve (11), the main valve core (12), and the first transition sleeve (21); the first damping hole (211) connects the first accommodating chamber (100) and the fourth accommodating chamber (400); a third damping hole (121) is disposed in the main valve core (12); and the third damping hole (121) connects the oil inlet (111) and the fourth accommodating chamber (400).

6. The pilot-operated electric proportional high-pressure relief valve according to claim 5, wherein a third axial action area ($A_3$) of a first end of the main valve core (12) on which hydraulic oil at the oil inlet (111) acts is less than or equal to a fourth axial action area ($A_4$) of a second end of the main valve core (12) on which hydraulic oil in the fourth accommodating chamber (400) acts.

7. The pilot-operated electric proportional high-pressure relief valve according to claim 5, wherein a first return spring (4) is installed between the main valve core (12) and the first transition sleeve (21).

8. The pilot-operated electric proportional high-pressure relief valve according to claim 1, wherein the proportional electromagnet assembly (3) further comprises a second transition sleeve (33) and a guide sleeve (35), wherein a first end of the second transition sleeve (33) is sleeved in the first transition sleeve (21), the guide sleeve (35) is sleeved in a second end of the second transition sleeve (33), the electromagnetic coil (31) is sleeved outside the guide sleeve (35), and the movable iron member (32) is arranged inside the guide sleeve (35); and the second transition sleeve (33) is provided with a through hole, and the first end of the movable iron member (32) extends through the through hole and abuts against the second end of the pilot valve core (22).

9. The pilot-operated electric proportional high-pressure relief valve according to claim 8, wherein the proportional electromagnet assembly (3) further comprises an electromagnet screw plug (36) disposed on a second end of the guide sleeve (35), and a second return spring (5) is installed between the electromagnet screw plug (36) and the movable iron member (32).

10. The pilot-operated electric proportional high-pressure relief valve according to claim 8, wherein the proportional electromagnet assembly (3) further comprises a control plug (38) electrically connected to the electromagnetic coil (31), and the control plug (38) is configured to control a magnetic field strength of the electromagnetic coil (31).

**Patentansprüche**

1. Vorgesteuertes, proportional regelbares Hochdruck-Druckbegrenzungsventil, umfassend

   ein Hauptventil (1), ein Steuerventil (2) und eine Proportionalbaugruppe (3), die nacheinander verbunden sind, wobei
   das Hauptventil (1) eine Hauptventilhülse (11) und einen Hauptventilkern (12), der in die Hauptventilhülse (11) eingehüllt ist, umfasst, ein erstes Ende der Hauptventilhülse (11) mit einem Öleinlass (111) versehen ist, der ausgelegt ist, um wahlweise durch den Hauptventilkern (12) gesperrt zu werden, und eine Seite der Hauptventilhülse (11) mit einer Entlastungsöffnung (112) versehen ist;
   das Steuerventil (2) eine erste Übergangshülse (21), einen Steuerventilkern (22) und einen Steuerschraubstopfen (23) umfasst, die erste Übergangshülse (21) abdichtend auf einem zweiten Ende des Hauptventils (1) montiert ist, die erste Übergangshülse (21) mit einer gestuften Sackbohrung versehen ist, der Steuerventilkern (22) und der Steuerschraubstopfen (23) nacheinander in der Sackbohrung montiert sind, die Sackbohrung mit einer ersten Aufnahmekammer (100) und einer zweiten Aufnahmekammer (200) versehen ist, die miteinander kommunizieren, ein erstes Ende des Steuerventilkerns (22) ausgelegt ist, um an einer gestuften Ringkante (213) der Sackbohrung anzuschlagen, um die erste Aufnahmekammer (100) von der zweiten Aufnahmekammer (200) zu trennen, ein zweites Ende des Steuerventilkerns (22) abdichtend in eine Montagerille (231) des Steuerschraubstopfens (23) gesteckt ist und eine dritte Aufnahmekammer (300) dadurch gebildet ist, dass sie vom zweiten Ende des Steuerventilkerns (22) und einer Innenwand der Montagerille (231) umschlossen ist;
   ein erstes Ende der ersten Übergangshülse (21) mit einem ersten Dämpfungsloch (211) versehen ist, das den Öleinlass (111) und die erste Aufnahmekammer (100) verbindet, ein zweites Dämpfungsloch (221), das die erste Aufnahmekammer (100) und die dritte Aufnahmekammer (300) verbindet, in dem Steuerventilkern (22) angeordnet ist, eine Seitenwand der ersten Übergangshülse (21) mit einem Ablassloch (212) versehen ist, das die zweite Aufnahmekammer (200) und einen Öltank verbindet, und ein erster axialer Wirkungsbereich ($A_1$) des ers-

   ten Endes des Steuerventilkerns (22), auf den Hydrauliköl in der ersten Aufnahmekammer (100) wirkt, größer ist als ein zweiter axialer Wirkungsbereich ($A_2$) des zweiten Endes des Steuerventilkerns (22), auf den Hydrauliköl in der dritten Aufnahmekammer (300) wirkt, und **dadurch gekennzeichnet, dass** das vorgesteuerte, proportional regelbare Hochdruck-Druckbegrenzungsventil ein vorgesteuertes, elektrisches, proportional regelbares Hochdruck-Druckbegrenzungsventil ist und dass die Proportionalbaugruppe eine Elektromagnet-Proportionalbaugruppe (3) ist, die eine elektromagnetische Spule (31) und ein bewegbares eisernes Element (32) umfasst, das in der elektromagnetischen Spule (31) angeordnet ist, wobei ein erstes Ende des bewegbaren eisernen Elements (32) an einem Ende des zweiten Endes des Steuerventilkerns (22) anschlägt und die elektromagnetische Spule (31) ausgelegt ist, um eine elektromagnetische Kraft zu erzeugen, die auf das bewegbare eiserne Element (32) wirkt, um den Steuerventilkern (22) gegen die gestufte Ringkante (213) zu pressen.

2. Vorgesteuertes, elektrisches, proportional regelbares Hochdruck-Druckbegrenzungsventil nach Anspruch 1, wobei ein Verhältnis des ersten axialen Wirkungsbereichs ($A_1$) zum zweiten axialen Wirkungsbereich ($A_2$) größer als 1,05 und kleiner als 1,3 ist.

3. Vorgesteuertes, elektrisches, proportional regelbares Hochdruck-Druckbegrenzungsventil nach Anspruch 1, wobei das erste Ende des Steuerventilkerns (22) eine konische Dichtungsoberfläche (222) aufweist, die ausgelegt ist, um an der gestuften Ringkante (213) anzuschlagen, um die erste Aufnahmekammer (100) von der zweiten Aufnahmekammer (200) zu trennen.

4. Vorgesteuertes, elektrisches, proportional regelbares Hochdruck-Druckbegrenzungsventil nach Anspruch 1, wobei die Montagerille (231) eine gestufte Rille ist, umfassend einen Rillenabschnitt mit großem Durchmesser (2311) und einen Rillenabschnitt mit kleinem Durchmesser (2312), wobei ein mittlerer Teil des Steuerventilkerns (22) verschiebbar auf dem Rillenabschnitt mit großem Durchmesser (2311) montiert ist und das zweite Ende des Steuerventilkerns (22) verschiebbar auf dem Rillenabschnitt mit kleinem Durchmesser (2312) montiert ist und sich durch den Rillenabschnitt mit kleinem Durchmesser (2312) erstreckt.

5. Vorgesteuertes, elektrisches, proportional regelbares Hochdruck-Druckbegrenzungsventil nach Anspruch 1, wobei das erste Ende der ersten Übergangshülse (21) in die Hauptventilhülse (11) eingehüllt ist, eine vierte Aufnahmekammer (400) dadurch gebildet ist, dass sie von einer Innenwand der Hauptventilhülse (11), dem Hauptventilkern (12) und der ersten Übergangshülse (21) umschlossen ist, das erste Dämpfungsloch (211) die erste Aufnahmekammer (100) und die vierte Aufnahmekammer (400) verbindet, ein drittes Dämpfungsloch (121) in dem Hauptventilkern (12) angeordnet ist und das dritte Dämpfungsloch (121) den Öleinlass (111) und die vierte Aufnahmekammer (400) verbindet.

6.  Vorgesteuertes, elektrisches, proportional regelbares Hochdruck-Druckbegrenzungsventil nach Anspruch 5, wobei ein dritter axialer Wirkungsbereich ($A_3$) eines ersten Endes des Hauptventilkerns (12) auf den Hydrauliköl an dem Öleinlass (111) wirkt, kleiner oder gleich einem vierten axialen Wirkungsbereich ($A_4$) eines zweiten Endes des Hauptventilkerns (12) ist, auf den Hydrauliköl in der vierten Aufnahmekammer (400) wirkt.

7.  Vorgesteuertes, elektrisches, proportional regelbares Hochdruck-Druckbegrenzungsventil nach Anspruch 5, wobei eine erste Rückstellfeder (4) zwischen dem Hauptventilkern (12) und der ersten Übergangshülse (21) montiert ist.

8.  Vorgesteuertes, elektrisches, proportional regelbares Hochdruck-Druckbegrenzungsventil nach Anspruch 1, wobei die Elektromagnet-Proportionalbaugruppe (3) ferner eine zweite Übergangshülse (33) und eine Führungshülse (35) umfasst, wobei ein erstes Ende der zweiten Übergangshülse (33) in die erste Übergangshülse (21) eingehüllt ist, die Führungshülse (35) in ein zweites Ende der zweiten Übergangshülse (33) eingehüllt ist, die elektromagnetische Spule (31) außerhalb der Führungshülse (35) eingehüllt ist und das bewegbare eiserne Element (32) innerhalb der Führungshülse (35) angeordnet ist und
die zweite Übergangshülse (33) mit einem Durchgangsloch versehen ist und sich das erste Ende des bewegbaren eisernen Elements (32) durch das Durchgangsloch erstreckt und am zweiten Ende des Steuerventilkerns (22) anschlägt.

9.  Vorgesteuertes, elektrisches, proportional regelbares Hochdruck-Druckbegrenzungsventil nach Anspruch 8, wobei die Elektromagnet-Proportionalbaugruppe (3) ferner einen Elektromagnet-Schraubstopfen (36) umfasst, der auf einem zweiten Ende der Führungshülse (35) angeordnet ist, und eine zweite Rückstellfeder (5) zwischen dem Elektromagnet-Schraubstopfen (36) und dem bewegbaren eisernen Element (32) angeordnet ist.

10. Vorgesteuertes, elektrisches, proportional regelbares Hochdruck-Druckbegrenzungsventil nach Anspruch 8, wobei die Elektromagnet-Proportionalbaugruppe (3) ferner einen Steuerstopfen (38) umfasst, der elektrisch mit der elektromagnetischen Spule (31) verbunden ist, und der Steuerstopfen (38) ausgelegt ist, um eine Magnetfeldstärke der elektromagnetischen Spule (31) zu steuern.

## Revendications

1.  Soupape de décharge haute pression proportionnelle commandée par pilote, comprenant

    une soupape principale (1), une soupape pilote (2) et un ensemble proportionnel (3) reliés en séquence, dans lequel
    la soupape principale (1) comprend un manchon de soupape principal (11) et un tiroir de soupape principal (12) emmanché dans le manchon de soupape principal (11), une première extrémité du manchon de soupape principal (11) est pourvue d'une entrée d'huile (111) configurée pour être bloquée de manière sélective par le tiroir de soupape principal (12), et un côté du manchon de soupape principal (11) est pourvu d'un orifice de décharge (112) ;
    la soupape pilote (2) comprend un premier manchon de transition (21), un tiroir de soupape pilote (22) et un bouchon à vis pilote (23) ; le premier manchon de transition (21) est installé de manière étanche sur une deuxième extrémité de la soupape principale (1) ; le premier manchon de transition (21) est pourvu d'un lamage étagé ; le tiroir de soupape pilote (22) et le bouchon à vis pilote (23) sont installés en séquence dans le lamage ; le lamage est pourvu d'une première chambre de réception (100) et d'une deuxième chambre de réception (200) communiquant l'une avec l'autre ; une première extrémité du tiroir de soupape pilote (22) est configurée pour venir en butée contre un bord annulaire étagé (213) du lamage pour séparer la première chambre de réception (100) de la deuxième chambre de réception (200) ; une deuxième extrémité du tiroir de soupape pilote (22) est enfichée de manière étanche dans une rainure d'installation (231) du bouchon à vis pilote (23) ; et une troisième chambre de réception (300) est formée en étant entourée par la deuxième extrémité du tiroir de soupape pilote (22) et une paroi interne de la rainure d'installation (231) ;
    une première extrémité du premier manchon de transition (21) est pourvue d'un premier trou d'amortissement (211) reliant l'entrée d'huile (111) et la première chambre de réception (100) ; un deuxième trou d'amortissement (221) reliant la première chambre de réception (100) et la troisième chambre de réception (300) est disposé dans le tiroir de soupape pilote (22) ; une paroi latérale du premier manchon de transition (21) est pourvue d'un trou de drainage (212) reliant la deuxième chambre de réception (200) et un réservoir d'huile ; et une première aire d'action axiale ($A_1$) de la première extrémité du tiroir de soupape pilote (22) sur laquelle l'huile hydraulique dans la première chambre de réception (100) agit est plus grande qu'une deuxième aire d'action axiale ($A_2$) de la deuxième extrémité du tiroir de soupape pilote (22) sur laquelle l'huile hydraulique dans la troisième chambre de réception (300) agit ; et **caractérisée en ce que** la soupape de décharge haute pression proportionnelle commandée par pilote est une soupape de décharge haute pression proportionnelle électrique commandée par pilote et **en ce que** l'ensemble proportionnel est un ensemble électroaimant proportionnel (3) qui comprend une bobine électromagnétique (31) et un organe en fer mobile (32) disposé dans la bobine électromagnétique (31), dans laquelle une première extrémité de l'organe en fer mobile (32) vient en butée contre une extrémité de la deuxième extrémité du tiroir de soupape pilote (22), et la bobine électromagnétique (31) est configurée pour générer une force électromagnétique agissant sur l'organe en fer mobile (32) pour appuyer le tiroir de soupape pilote (22) contre le bord annulaire étagé (213).

2. Soupape de décharge haute pression proportionnelle électrique commandée par pilote selon la revendication 1, dans laquelle un rapport de la première aire d'action axiale ($A_1$) à la deuxième aire d'action axiale ($A_2$) est supérieur à 1,05 et inférieur à 1,3.

3. Soupape de décharge haute pression proportionnelle électrique commandée par pilote selon la revendication 1, dans laquelle la première extrémité du tiroir de soupape pilote (22) présente une surface d'étanchéité conique (222) configurée pour venir en butée contre le bord annulaire étagé (213) pour séparer la première chambre de réception (100) de la deuxième chambre de réception (200).

4. Soupape de décharge haute pression proportionnelle électrique commandée par pilote selon la revendication 1, dans laquelle la rainure d'installation (231) est une rainure étagée comprenant une section de rainure de grand diamètre (2311) et une section de rainure de petit diamètre (2312), une partie centrale du tiroir de soupape pilote (22) est installée de manière coulissante sur la section de rainure de grand diamètre (2311), et la deuxième extrémité du tiroir de soupape pilote (22) est installée de manière coulissante sur la section de rainure de petit diamètre (2312) et s'étend à travers la section de rainure de petit diamètre (2312).

5. Soupape de décharge haute pression proportionnelle électrique commandée par pilote selon la revendication 1, dans laquelle la première extrémité du premier manchon de transition (21) est emmanchée dans le manchon de soupape principal (11) ; une quatrième chambre de réception (400) est formée en étant entourée par une paroi interne du manchon de soupape principal (11), le tiroir de soupape principal (12) et le premier manchon de transition (21) ; le premier trou d'amortissement (211) relie la première chambre de réception (100) et la quatrième chambre de réception (400) ; un troisième trou d'amortissement (121) est disposé dans le tiroir de soupape principal (12) ; et le troisième trou d'amortissement (121) relie l'entrée d'huile (111) et la quatrième chambre de réception (400).

6. Soupape de décharge haute pression proportionnelle électrique commandée par pilote selon la revendication 5, dans laquelle une troisième aire d'action axiale ($A_3$) d'une première extrémité du tiroir de soupape principal (12) sur laquelle l'huile hydraulique au niveau de l'entrée d'huile (111) agit est plus petite que ou égale à une quatrième aire d'action axiale ($A_4$) d'une deuxième extrémité du tiroir de soupape principal (12) sur laquelle l'huile hydraulique dans la quatrième chambre de réception (400) agit.

7. Soupape de décharge haute pression proportionnelle électrique commandée par pilote selon la revendication 5, dans laquelle un premier ressort de rappel (4) est installé entre le tiroir de soupape principal (12) et le premier manchon de transition (21).

8. Soupape de décharge haute pression proportionnelle électrique commandée par pilote selon la revendication 1, dans laquelle l'ensemble électroaimant proportionnel (3) comprend en outre un deuxième manchon de transition (33) et un manchon de guidage (35), dans laquelle une première extrémité du deuxième manchon de transition (33) est emmanchée dans le premier manchon de transition (21), le manchon de guidage (35) est emmanché dans une deuxième extrémité du deuxième manchon de transition (33), la bobine électromagnétique (31) est emmanchée à l'extérieur du manchon de guidage (35), et l'organe en fer mobile (32) est disposé à l'intérieur du manchon de guidage (35) ; et le deuxième manchon de transition (33) est pourvu d'un trou traversant, et la première extrémité de l'organe en fer mobile (32) s'étend à travers le trou traversant et vient en butée contre la deuxième extrémité du tiroir de soupape pilote (22).

9. Soupape de décharge haute pression proportionnelle électrique commandée par pilote selon la revendication 8, dans laquelle l'ensemble électroaimant proportionnel (3) comprend en outre un bouchon à vis à électroaimant (36) disposé sur une deuxième extrémité du manchon de guidage (35), et un deuxième ressort de rappel (5) est installé entre le bouchon à vis à électroaimant (36) et l'organe en fer mobile (32).

10. Soupape de décharge haute pression proportionnelle électrique commandée par pilote selon la revendication 8, dans laquelle l'ensemble électroaimant proportionnel (3) comprend en outre une fiche de commande (38) reliée électriquement à la bobine électromagnétique (31), et la fiche de commande (38) est configurée pour commander une intensité de champ magnétique de la bobine électromagnétique (31).

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011062690
- US 2007245889 A1